# EUROPÄISCHE PATENTSCHRIFT

(11) **EP 2 916 019 B1**
(45) Veröffentlichungstag und Bekanntmachung des Hinweises auf die Patenterteilung: **20.11.2019**
(21) Anmeldenummer: 15155689.1
(22) Anmeldetag: 19.02.2015
(51) Int. Cl.: F16C 33/66, F16C 33/10

(54) **Schmiersystem für ein Lager sowie Lager mit einem Schmiersystem und Verfahren zum Schmieren eines Lagers**
Lubrication system for a bearing and bearing having a lubrication system and method for lubricating a bearing
Système de lubrification pour un palier, palier avec un système de lubrification et procédé de lubrification d'un palier

(30) Priorität: 06.03.2014 DE 102014204062
(43) Veröffentlichungstag der Anmeldung: 09.09.2015
(73) Patentinhaber: Aktiebolaget SKF, 415 50 Göteborg (SE); SKF Lubrication Systems Germany GmbH, 69190 Walldorf (DE)
(72) Erfinder: Kreutzkämper, Jürgen, 74915 Waibstadt-Daisbach (DE); Schuermann, Stefan, 69190 Walldorf (DE); Teupner, Martin, 68809 Neulußheim (DE); Ullmann, Johannes, 97539 Wonfurt (DE)
(74) Vertreter: Kuhstrebe, Jochen

(56) Entgegenhaltungen:
- EP-A2- 2 657 556
- JP-A- 2008 303 988

## Beschreibung

Ausführungsbeispiele beziehen sich auf ein Schmiersystem für ein Lager mit einem Schmiersystem und ein Verfahren zum Schmieren eines Lagers.

In einer Vielzahl von Lagern wird ein Schmierstoff oder ein Schmiermittel verwendet. Die optimale Versorgung eines Lagers mit dem Schmierstoff kann das Lager ggf. vor einer Vielzahl schädlicher Einflüsse schützen und evtl. die Lebensdauer des Lagers erhöhen. In einem Betrieb des Lagers kann der Schmierstoff unterschiedlichen Belastungen ausgesetzt sein. Beispielsweise kann der Schmierstoff einem Verschleiß unterliegen. Dies kann dazu führen, dass sich die Qualität des Schmierstoffs verschlechtert. Ferner können sich in dem Schmierstoff auch Verschmutzungen oder Fremdkörper ansammeln. Zudem kann sich eine Schmierstoffmenge während des Betriebs in dem Lager ändern. Beispielsweise kann sich die Schmierstoffmenge durch Nachschmieren erhöhen oder durch aus dem Lager austretenden Schmierstoff verringern.

Um eine Qualität und/oder Quantität des Schmierstoffs in einem Lager konstant zu halten, wird der Schmierstoff in dem Lager meist ersetzt oder ergänzt. Dazu können unterschiedliche konventionelle Schmiersysteme oder -ansätze verfolgt werden. Bei manchen konventionellen Schmiersystemen wird der Schmierstoff des Lagers während planmäßiger Wartungsarbeiten vollständig ausgetauscht. Dadurch kann die Schmierstoffmenge unter Umständen konstant gehalten werden. Der Schmierstoff wird zum Beispiel in einem Intervall ausgetauscht, das vom Hersteller festgelegt oder vorgeschlagen wird. Allerdings kann der vollständige Austausch der Schmierstoffmenge in geplanten Intervallen dazu führen, dass der Schmierstoff nach dem Austausch in hoher Qualität vorliegt und die Qualität bis zum erneuten Austausch kontinuierlich abnimmt.

Alternativ kann die Schmierung des Lagers über ein konventionelles Zentralschmiersystem erfolgen. Bei konventionellen Zentralschmiersystemen wird meist in bestimmten Intervallen, die sich beispielsweise durch Erfahrungswerte ergeben, eine im Verhältnis zur Gesamtschmierstoffmenge des Lagers kleine Teilschmierstoffmenge in das Lager eingebracht. Meist weist das Lager dann Schmierstoffaustrittsöffnungen auf, aus denen alter oder verbrauchter Schmierstoff austritt, wenn neuer oder frischer Schmierstoff eingebracht wird. Durch das regelmäßige Nachfüllen von frischem Schmierstoff kann die Schmierstoffqualität meist auf einem relativ gleichmäßigen Niveau gehalten werden. Allerdings kann eine Schmierstoffmenge in dem Lager nicht genau bestimmt werden, da durch das Zuführen von Schmierstoff in das Lager nicht genau beeinflusst werden kann, welche Schmierstoffmenge aus dem Lager austritt. Um dieses Problem zu lösen, wird beispielsweise in der EP 2 657 556 A2 oder der JP 2008 303 988 ein System vorgeschlagen, bei dem auch das Entsorgen des Schmierstoffs über eine Pumpe erfolgt.

Es besteht also ein Bedarf daran, ein Konzept bereitzustellen, mit dem die Schmierung eines Lagers verbessert werden kann. Diesem Bedarf tragen ein Schmiersystem nach Anspruch 1, sowie ein Lager mit einem Schmiersystem nach Anspruch 9 und ein Verfahren zum Schmieren eines Lagers nach Anspruch 10 Rechnung.

Ausführungsbeispiele betreffen ein Schmiersystem für ein Lager. Das Schmiersystem weist ein Schmierstoffversorgungssystem mit einer Fördereinrichtung auf. Die Fördereinrichtung ist ausgebildet, um eine erste Schmierstoffmenge in das Lager einzubringen. Ferner umfasst das Schmiersystem auch ein Schmierstoffentsorgungssystem mit einer Fördereinrichtung, die ausgebildet ist, um eine zweite Schmierstoffmenge aus dem Lager zu entnehmen. Des Weiteren weist das Schmiersystem eine Steuereinrichtung auf. Mit der Steuereinrichtung können die Fördereinrichtungen des Schmierstoffentsorgungssystems und des Schmierstoffversorgungssystems in Abhängigkeit voneinander aktiviert werden.

Dadurch, dass sowohl das Schmierstoffentsorgungssystem und auch das Schmierstoffversorgungssystem jeweils eine eigene Fördereinrichtung aufweisen, die in Abhängigkeit voneinander aktiviert werden können, kann bei manchen Ausführungsbeispielen die zweite, aus dem Lager entnommene Schmierstoffmenge auf die erste, in das Lager eingebrachte Schmierstoffmenge angepasst werden. Es könnte also eine Schmierstoffmenge, die sich in dem Lager befindet, bestimmt werden. Das Bestimmen einer Schmierstoffmenge kann zum Beispiel ein Halten der Schmierstoffmenge auf einem bestimmten Niveau oder ein Erhöhen oder Verringern der Schmierstoffmenge um einen bestimmten Anteil sein. Der Anteil kann dabei unter Umständen in einem Wertebereich mit einem Anfangswert und/oder einem Endwert liegen, der 0%, 0.1%, 0.5%, 1%, 5%, 10%, 15%, und/oder 20% einer Gesamtschmierstoffmenge ausmacht. Sollte das Lager leer sein, kann das Lager bei manchen Ausführungsbeispielen mit dem Schmierstoffversorgungssystem befüllt werden. Dann kann ggf. eine einzubringende Gesamtschmierstoffmenge also beispielsweise 3 kg oder 25 kg bestimmt werden.

Bei den Fördereinrichtungen des Schmierstoffentsorgungssystems und des Schmierstoffversorgungssystems kann es sich dabei um zwei selbstständige, unabhängig voneinander arbeitende und betreibbare Fördereinrichtungen handeln. Als Fördereinrichtung können zum Beispiel alle möglichen Vorrichtungen eingesetzt werden, mit denen ein Medium, wie Schmierstoff oder eine Schmierstoffmenge in ein Lager ein- und/oder aus diesem wieder entfernt werden kann. Die Schmierstoffmenge kann beispielsweise alle möglichen Arten von Schmierstoff umfassen. Bei dem Schmierstoff kann es sich zum Beispiel um ein Schmierfett, eine Schmierflüssigkeit, ein Schmieröl oder dgl. handeln. Ergänzend oder alternativ kann es sich bei dem Schmierstoffentsorgungssystem und dem Schmierstoffversorgungssystem um voneinander getrennte Einrichtungen handeln. Beispielsweise kann der Schmierstoff nur zwischen dem Schmierstoffversorgungssystem und dem Schmierstoffentsorgungssystem fließen. Beispielsweise kann der Schmierstoff oder die zweite Schmierstoffmenge nicht über einen Kreislauf oder eine Leitung von dem Schmierstoffentsorgungssystem zu dem Schmierstoffversorgungssystem gelangen.

Eine Steuereinrichtung kann zum Beispiel jedwede Einrichtung sein, die ausgebildet ist, um eine Fördereinrichtung zu aktivieren. Beispielsweise kann die Steuereinrichtung ein Controller, ein Prozessor, ein digitaler Signalprozessor, ein Hauptprozessor (CPU von engl.: "Central Processing Unit"), ein Multizweck-Prozessor (MPP von engl.: "Multi Purpose Processor") oder ähnliches sein.

Mit dem Schmiersystem wird bei manchen Ausführungsbeispielen eine Gesamtschmierstoffmenge in dem Lager, die für einen bestimmten Betriebszeitraum vorgesehen ist, während des bestimmten Betriebszeitraums zumindest teilweise ausgetauscht. Dies kann beispielsweise in einer Mehrzahl von Teilbefüllungsvorgängen und einer Mehrzahl von Teilentleerungsvorgängen erfolgen. Dazu können mittels der Fördereinrichtung des Schmierstoffversorgungssystems eine Mehrzahl von Teilschmierstoffmengen zugeführt werden. Analog können mit der Fördereinrichtung des Schmierstoffentsorgungssystems eine Mehrzahl von Teilschmierstoffmengen abgeführt werden. Die entsprechende Aktivierung der Fördereinrichtungen in kurzen Intervallen kann zum Beispiel mittels der Steuereinrichtung erfolgen. So könnte ermöglicht werden, dass eine Qualität des Schmierstoffs über den bestimmten Betriebszeitraum im Wesentlichen gleich bleibt. Dadurch könnte ein starkes Schwanken der Schmierstoffqualität vermieden werden. Das starke Schwanken der Schmierstoffqualität kann bei den konventionellen Wartungskonzepten unter Umständen daher rühren, dass der Schmierstoff nach dem Austausch frisch und unverbraucht, also in höherer Qualität und vorliegt. Der nächste Austausch kann z.B. erfolgt erst dann erfolgen, wenn der Schmierstoff fast verbraucht ist oder eine schlechte Qualität aufweist.

Die kurzen Intervalle, in denen die Fördereinrichtungen aktiviert werden, können zum Beispiel Teile des bestimmten Betriebszeitraums sein, für den die Gesamtschmierstoffmenge vorgesehen ist. Die Teilschmierstoffmenge kann zum Beispiel ein Teil der Gesamtschmierstoffmenge sein. Der bestimmte Betriebszeitraum kann beispielsweise von einem Lagerhersteller oder einem Schmierstoffhersteller vorgegeben oder vorgeschlagen sein. Die Intervalle können dabei ggf. alle gleich lang sein oder unterschiedliche Längen aufweisen. Unter Umständen kann ein Intervall deutlich kleiner als der bestimmte Betriebszeitraum sein. Zum Beispiel kann die Länge eines Intervalls in einem Wertebereich liegen, dessen Anfangs- und/oder Endwert 0,1%, 0,5%, 1%, 3%, 5% oder 10% des gesamten Betriebszeitraums für den die Gesamtschmierstoffmenge vorgesehen ist, ausmachen. Unter Umständen können die Teilschmierstoffmenge und das Intervall einen gleichen Teiler gegenüber der Gesamtschmierstoffmenge und dem gesamten Betriebszeitraum aufweisen.

Bei einigen weiteren Ausführungsbeispielen entspricht die zweite Schmierstoffmenge, die aus dem Lager entfernt wird, der ersten Schmierstoffmenge, die in das Lager eingebracht wird. Dazu wird die Fördereinrichtung des Schmierstoffentsorgungssystems von der Steuereinrichtung entsprechend angesteuert. So kann bei manchen Ausführungsbeispielen bewirkt werden, dass die Gesamtschmierstoffmenge in dem Lager im Wesentlichen konstant bleibt. Es könnte also auf die Schmierstoffmenge, die aus dem Lager austritt bzw. aus diesem entsorgt wird, Einfluss genommen werden. Dies kann möglich sein, weil das Entsorgen des Schmierstoffs aktiv, nämlich über eine eigene Fördereinrichtung vorgenommen werden kann. Dieses aktive Entsorgen des Schmierstoffs unterscheidet sich von einem sogenannten passiven Entsorgen des Schmierstoffs. Quasi als Nebeneffekt kann bei konventionellen Schmiersystemen, wenn neuer Schmierstoff in ein Lager eingebracht wird, alter oder verbrauchter Schmierstoff aus Schmierstoffbohrungen oder Ölbohrungen herausgedrückt werden. Demgegenüber kann bei manchen Ausführungsbeispielen eine Menge des austretenden Schmierstoffs kontrolliert und/oder aktiv bestimmt oder beeinflusst werden.

Ergänzend oder alternativ umfasst das Schmierstoffversorgungssystem bei manchen Ausführungsbeispielen eine Messeinrichtung. Mit der Messeinrichtung kann das Volumen und/oder eine Masse der ersten Schmierstoffmenge bestimmt werden. Bei manchen Ausführungsbeispielen kann die Steuereinrichtung so eine Information darüber enthalten, wie viel Schmierstoff dem Lager bei einem Teilbefüllungsvorgang zugeführt wird. Analog kann bei einigen weiteren Ausführungsbeispielen auch das Schmierstoffentsorgungssystem eine Messeinrichtung aufweisen. Mit der Messeinrichtung des Schmierstoffentsorgungssystems kann das Volumen oder eine Masse der zweiten Schmierstoffmenge bestimmt werden. Dadurch, dass bei manchen Ausführungsbeispielen genaue Informationen zu der zugeführten und entnommenen Schmierstoffmenge vorliegen, kann die Abstimmung der zweiten entnommenen Schmierstoffmenge auf die erste zugeführte Schmierstoffmenge verbessert werden. So kann beispielsweise eine Gesamtschmierstoffmenge in dem Lager konstant gehalten werden. Dadurch, dass das Volumen und/oder die Masse ermittelt wird, können die tatsächlich ein- und/oder ausgebrachten Mengen genauer bestimmt werden.

Um möglichst genau Ergebnisse oder Werte zu dem Volumen der Schmierstoffmenge zu erhalten, umfasst bei einigen weiteren Ausführungsbeispielen zumindest eine der Messeinrichtungen weitere Sensoren. Diese Sensoren können ausgebildet sein, um zu ermitteln, ob die ein- oder ausgebrachte Schmierstoffmenge tatsächlich nur Schmierstoff oder auch Gaseinschlüsse, wie Luftblasen oder dgl. umfasst.

Bei einigen weiteren Ausführungsbeispielen umfasst das Schmiersystem eine Schmierstoffanalyseeinrichtung. Mit der Schmierstoffanalyseeinrichtung kann ein Zustand der zweiten entnommenen Schmierstoffmenge ermittelt werden. So kann bei manchen Ausführungsbeispielen eine Anpassung der Intervalle erfolgen, in denen die Fördereinrichtung aktiviert wird. Ergänzend oder alternativ kann auch eine Anpassung der Menge der zugeführten und/oder entnommenen Schmierstoffmenge an den Zustand des entnommenen Schmierstoffs erfolgen. Mit anderen Worten könnten bei einem guten Zustand des Schmierstoffes die Intervalle erhöht und/oder die zugeführte Menge reduziert werden. Analog könnten bei einem schlechten Zustand der entnommenen Schmierstoffmenge die Intervalle verkürzt und/oder die zugeführte Schmierstoffmenge erhöht werden. Bei dem Zustand des Schmierstoffs kann es sich beispielsweise um ein Alter, ein Fließverhalten, eine Verschmutzung des Schmierstoffs, einen Grad des Verbrauchs des Schmierstoffs und/oder dgl. handeln. Bei einem guten Zustand des Schmierstoffs kann dann zum Beispiel eine geringe Verschmutzung, ein geringer Verschleiß, ein geringes Alter, ein geringer Verbrauch und/oder dgl. vorliegen. Ergänzend oder alternativ kann mit der Schmierstoffanalyseeinrichtung bei manchen Ausführungsbeispielen festgestellt werden, ob tatsächlich alter und/oder verbrauchter Schmierstoff entnommen wird oder ob ungewollter Weise der erst vor kurzem in das Lager eingebrachter Schmierstoff entnommen wird. Ferner könnten über den Zustand oder Verbrauch der zweiten, entnommenen Schmierstoffmengen auch Rückschlüsse auf den Zustand des Lagers gezogen werden.

Ergänzend oder alternativ umfasst das Schmiersystem bei manchen Ausführungsbeispielen eine Lageranalyseeinrichtung. Mit der Lageranalyseeinrichtung lässt sich zum Beispiel ein Zustand des Lagers ermitteln. Bei manchen Ausführungsbeispielen kann ggf. aufgrund der Information über den Zustand des Lagers das Intervall zum Zuführen und/oder Entnehmen der Schmierstoffmenge und auch die Schmierstoffmenge selbst angepasst werden. Ferner könnte auf Grundlage der Information über einen Zustand des Lagers auch eine Gesamtschmierstoffmenge angepasst werden. Um den Zustand des Lagers zu ermitteln, kann ggf. eine Lautstärke ermittelt werden, die das Lager im Betrieb verursacht. Ergänzend oder alternativ können Schwingungen, die im Betrieb des Lagers auftreten, zu der Zustandsanalyse des Lagers herangezogen werden. Um die zweite Schmierstoffmenge an die erste Schmierstoffmenge anzupassen, kann diese zum Beispiel vergrößert oder verkleinert werden.

Bei einigen weiteren Ausführungsbeispielen ist die Steuereinrichtung ausgebildet, um die Menge der ersten Schmierstoffmenge gegenüber der Menge der zweiten Schmierstoffmenge anzupassen. So könnte in Abhängigkeit des ermittelten Zustands des Lagers und/oder des Zustands der zweiten entnommenen Schmierstoffmenge die Gesamtschmierstoffmenge in dem Lager verändert werden.

Ausführungsbeispiele betreffen gemäß einem weiteren Aspekt ein Lager mit einem Schmiersystem nach zumindest einem der Ausführungsbeispiele. Dadurch kann bei Lagern mancher Ausführungsbeispiele eine Wartung vereinfacht und/oder verbessert werden. Eventuell kann so die Wartung oder der Schmierstoffaustausch bei Lagern, die schwer zugänglich sind, vereinfacht werden. Das Lager gemäß manchen Ausführungsbeispielen kann zum Beispiel zur Lagerung eines Rotors in einer Windmühle oder einem Windrad bzw. einer Windenergieanlage eingesetzt werden.

Ausführungsbeispiele betreffen gemäß einem weiteren Aspekt ein Verfahren zum Schmieren eines Lagers. Bei dem Verfahren wird eine Fördereinrichtung eines Schmierstoffversorgungssystems aktiviert, um eine erste Schmierstoffmenge in das Lager einzubringen. Es wird auch eine Fördereinrichtung eines Schmierstoffentsorgungssystems aktiviert, um eine zweite Schmierstoffmenge aus dem Lager zu entnehmen. Das Aktivieren der Fördereinrichtungen erfolgt dabei in Abhängigkeit voneinander. Dadurch, dass die beiden Fördereinrichtungen in Abhängigkeit voneinander aktiviert werden, kann bei manchen Ausführungsbeispielen ermöglicht werden, dass die erste Schmierstoffmenge auf die zweite Schmierstoffmenge angepasst und/oder abgestimmt wird.

Weitere vorteilhafte Ausgestaltungen werden nachfolgend anhand von in den Zeichnungen dargestellten Ausführungsbeispielen, auf welche Ausführungsbeispiele jedoch nicht beschränkt sind, näher beschrieben.
Fig. 1 zeigt eine schematische Darstellung eines Schmiersystems für ein Lager gemäß einem Ausführungsbeispiel;
Fig. 2 zeigt eine schematische Darstellung eines Verfahrens zum Schmieren eines Lagers gemäß einem Ausführungsbeispiel.

Bei der nachfolgenden Beschreibung der beigefügten Darstellungen bezeichnen gleiche Bezugszeichen gleiche oder vergleichbare Komponenten. Ferner werden zusammenfassende Bezugszeichen für Komponenten und Objekte verwendet, die mehrfach in einem Ausführungsbeispiel oder in einer Darstellung auftreten, jedoch hinsichtlich eines oder mehrerer Merkmale gemeinsam beschrieben werden. Komponenten oder Objekte, die mit gleichen oder zusammenfassenden Bezugszeichen beschrieben werden, können hinsichtlich einzelner, mehrerer oder aller Merkmale, beispielsweise ihrer Dimensionierungen, gleich, jedoch gegebenenfalls auch unterschiedlich ausgeführt sein, sofern sich aus der Beschreibung nicht etwas anderes explizit oder implizit ergibt.

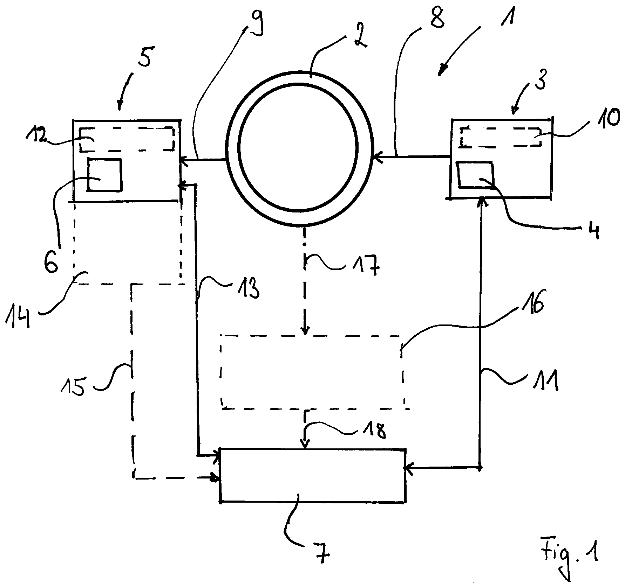

Fig. 1 zeigt eine schematische Darstellung eines Schmiersystems 1 für ein Lager 2 gemäß einem Ausführungsbeispiel.

Das in Fig. 1 gezeigte Schmiersystem 1 für das Lager 2 umfasst ein Schmierstoffversorgungssystem 3 mit einer Fördereinrichtung 4. Die Fördereinrichtung 4 ist ausgebildet, um eine erste Schmierstoffmenge 8 in das Lager 2 einzubringen. Das Schmiersystem 1 umfasst auch ein Schmierstoffentsorgungssystem 5. Das Schmierstoffentsorgungssystem 5 weist eine Fördereinrichtung 6 auf, die ausgebildet ist, um eine zweite Schmierstoffmenge 9 aus dem Lager 2 zu entnehmen. Des Weiteren weist das Schmiersystem 1 auch eine Steuereinrichtung 7 auf, die ausgebildet ist, um die Fördereinrichtung 6 des Schmierstoffentsorgungssystems 5 und die Fördereinrichtung 4 des Schmierstoffversorgungssystems 3 in Abhängigkeit voneinander zu aktivieren.

Mit anderen Worten können für das Schmiersystem 1 mit dem Schmierstoffversorgungssystem 3 mindestens ein Zentralschmiersystem sowie ein mit dem Schmierstoffentsorgungssystem 5 und ein System zur Entnahme von Schmierstoff aus dem Lager 2 kombiniert sein. Die beiden Systeme können von einer gemeinsamen Steuerung, also mit der Steuereinrichtung 7 unabhängig voneinander betrieben werden. Das Schmierstoffentsorgungssystem 5 kann beispielsweise auch als invertiertes Zentralschmiersystem bezeichnet werden. Das Aktivieren der Fördereinrichtung 6 in Abhängigkeit von der Fördereinrichtung 4 kann zum Beispiel basierend auf einer Information über ein Intervall, eine Menge und/oder einen Zustand des Lagers 2 und/oder des Schmierstoffs erfolgen.

Als Fördereinrichtungen 4 und/oder 6 können alle möglichen Pumpen, zum Beispiel Kolbenpumpen, Zahnrad- oder Zahnringpumpen eingesetzt werden. Bei den Fördereinrichtungen 4 und 6 kann es sich ggf. in Bezug auf eine Bauform, Baugröße, Funktionsweise und/oder dgl. um unterschiedliche, ähnliche oder sogar baugleiche Fördereinrichtungen handeln.

Als Schmierstoff, der in dem Schmiersystem 1 für das Lager 2 verwendet wird, kann jedwedes Schmiermedium verwendet werden, beispielsweise Schmieröle oder Schmierfette. Für manche Anwendungen werden Schmierfette der NLGI-Klasse (von: Konsistenzkennzahl nach DIN 51818) 1 oder 2 bzw. Konsistenzklasse 1 oder 2 eingesetzt.

Mit dem Schmiersystem 1 kann der Schmierstoff oder eine Gesamtschmierstoffmenge in dem Lager 2 kontinuierlich ausgetauscht werden. Ein kontinuierlicher Austausch der Gesamtschmierstoffmenge kann zum Beispiel durch das Zu- und/oder Abführen von Teilschmierstoffmengen in aufeinanderfolgenden Intervallen durchgeführt werden. Die Intervalle oder Abstände können sich dabei unter Umständen dadurch ergeben, dass eine Gesamtlebensdauer oder ein Betriebszeitraum des Schmierstoffs oder ein Zeitraum, in dem der Schmierstoff eines Lagers vollständig ausgetauscht werden soll, in eine Mehrzahl von Einheiten oder Intervallen unterteilt wird. Bei einem Lager für das zum Beispiels 20 kg Schmierstoff vorgesehen sind, der nach zwei Jahren erneuert werden soll, können dann jedes Jahr, also in zwei Intervallen, zwei Teilschmierstoffmengen von jeweils 10 kg nachgefüllt und wieder entnommen werden. Bei anderen Ausführungsbeispielen können dem Lager 2 in einem Intervall, das einen Tag umfasst, als Teilschmierstoffmenge ca. 30 g Schmierstoff zugeführt und entnommen werden. Je nach Lager, Schmiermedium, Gesamtschmierstoffmenge und/oder Einsatzzweck kann ein Intervall oder Abstand in einem Wertebereich mit einem Anfangswert und/oder einem Endwert von 1 Stunde, 5 Stunden, 10 Stunden, 1 Tag, 2 Tagen, 1 Woche, 1 Monat einem Jahr od. dgl. liegen.

Um den kontinuierlichen Austausch zu bewirken, wird mit der Fördereinrichtung 4 des Schmierstoffversorgungssystems 3 in bestimmten Abständen oder Intervallen eine erste Schmierstoffmenge 8 in das Lager 2 eingebracht. Bei der ersten Schmierstoffmenge 8 handelt es sich um frischen, unverbrauchten Schmierstoff. Der frische Schmierstoff kann beispielsweise noch nicht in einem Lager verwendet worden sein, wurde noch keiner Beanspruchung ausgesetzt und/oder weist noch keine Verschmutzungen auf. Entsprechend wird mit der Fördereinrichtung 6 des Schmierstoffentsorgungssystems 5 die zweite Schmierstoffmenge aus dem Lager 2 entnommen. Bei der zweiten Schmierstoffmenge 9, die mittels des Schmierstoffentsorgungssystems 5 aus dem Lager 2 entnommen wird, handelt es sich also um verbrauchten Schmierstoff. Die zweite Schmierstoffmenge 9 oder der verbrauchte Schmierstoff wurde beispielsweise in dem Lager 2 beansprucht, gewalkt und/oder kann Verunreinigungen aufweisen.

Optional umfasst das Schmierstoffversorgungssystem 3 des Schmiersystems 1 bei dem Ausführungsbeispiel der Fig. 1 eine Messeinrichtung 10. Mit der Messeinrichtung 10 kann die Menge der ersten Schmierstoffmenge 8 bestimmt werden, die in das Lager 2 eingebracht wird. Dazu kann beispielsweise ein Volumen und/oder eine Masse der Schmierstoffmenge 8 bestimmt werden. Um das Volumen oder die Masse der ersten Schmierstoffmenge 8 zu bestimmen, kann ggf. eine nicht dargestellte Dosiervorrichtung eingesetzt werden. Zum Beispiel kann dazu der einzubringende Schmierstoff vordosiert und dann mit der Fördereinrichtung 4 in das Lager 2 eingebracht werden. Das Vordosieren des Schmierstoffs kann unter Umständen volumenbasiert erfolgen. Optional kann das Bestimmen der Schmierstoffmenge 8 auch über ein sogenanntes Progressivsystem erfolgen. Beispielsweise können so die mit der Fördereinrichtung 4 ausgeführten Hübe erfasst werden. Über ein der Steuereinrichtung 7 bekanntes oder mitgeteiltes Hubvolumen der Fördereinrichtung 4 kann dann ebenfalls auf das Volumen der ersten Schmierstoffmenge 8 geschlossen werden.

Die Steuereinrichtung 7 kann also von dem Schmierstoffversorgungssystem 3 Informationen über die erste eingebrachte Schmierstoffmenge 8 oder deren Volumen und/oder Masse erhalten, wie durch einen Pfeil 11 angedeutet. Zwischen der Steuereinrichtung 7 und dem Schmierstoffversorgungssystem 3 können also Messwerte beispielsweise von dem Schmierstoffversorgungssystem 3 zu der Steuereinrichtung 7 ausgetauscht werden. Ferner können, wie durch den beidseitigen Pfeil 11 angedeutet, auch in die andere Richtung, beispielsweise Steuersignale von der Steuereinrichtung 7 zu dem Schmierstoffversorgungssystem 3 ausgetauscht werden. Diese Steuersignale können zum Beispiel dazu dienen, um die Fördereinrichtung 4 des Schmierstoffversorgungssystems 3 zu aktivieren. Mit anderen Worten umfasst das Schmierstoffversorgungssystem 3 als System zur Schmierstoffversorgung eine Mengenerfassung.

Analog zu dem Schmierstoffversorgungssystem 3 umfasst bei dem Ausführungsbeispiel der Fig. 1 auch das Schmierstoffentsorgungssystem 5 eine Messeinrichtung 12. Damit weist auch das Schmierstoffentsorgungssystem 5 als System zur Schmierstoffentsorgung eine Mengenerfassung auf. Die Messeinrichtung 12 kann im Wesentlichen analog zu der Messeinrichtung 10 ausgebildet sein. Die Messeinrichtung 12 dient zum Erfassen eines Volumens oder einer Masse der zweiten aus dem Lager 2 entnommenen Schmierstoffmenge 9. Unter Umständen kann als Messeinrichtung 12 zum Erfassen der zweiten oder verbrauchten Schmierstoffmenge 9 eine andere Vorrichtung als zu dem Bestimmen der eingebrachten ersten Schmierstoffmenge 8 eingesetzt werden. Dies kann beispielsweise daher rühren, dass der verbrauchte Schmierstoff andere Eigenschaften als der frische Schmierstoff also die erste Schmierstoffmenge 8 aufweist. Zum Beispiel kann bei dem Bestimmen des Volumens der zweiten Schmierstoffmenge 9 das Problem auftreten, dass dieser Luftblasen aufweisen kann.

Die Steuereinrichtung 7 kann, wie mit dem Pfeil 13 angedeutet, auch mit dem Schmierstoffentsorgungssystem 5 kommunizieren. Zwischen dem Schmierstoffentsorgungssystem 5 und der Steuereinrichtung 7 können also beispielsweise Messwerte und/oder Steuersignale ausgetauscht werden. Durch die Kombination des Schmierstoffversorgungssystems 3 zur Versorgung des Lagers 2 mit Schmierstoff und dem Schmierstoffentsorgungssystem 5 zur Entnahme von Schmierstoff aus dem Lager 2 mit einer gemeinsamen Steuerung durch die Steuereinrichtung 7 kann bei manchen Ausführungsbeispielen erreicht werden, dass das Schmierstoffversorgungssystem 3 das Lager 2 kontinuierlich mit definierten Mengen frischen Schmierstoffs, also der ersten Schmierstoffmenge 8 versorgt. Dadurch kann die Schmierstoffqualität in dem Lager 2 auf einem konstanten hohen Niveau gehalten werden. Das Schmierstoffentsorgungssystem 5 entnimmt kontinuierlich definierte Mengen an verbrauchtem Schmierstoff also die zweite Schmierstoffmenge 9 aus dem Lager 2 und hält damit die Schmierstoffmenge, oder die Gesamtschmierstoffmenge in dem Lager 2 konstant. Durch das Zusammenwirken dieser beiden Komponenten wird der Schmierstoff in dem Lager 2 kontinuierlich erneuert. Es kann ein Austausch des Schmierstoffs in definierten Intervallen ermöglicht werden. Die gemeinsame Steuereinrichtung 7 regelt und überwacht den Betrieb der beiden Komponenten Schmierstoffversorgungssystem 3 und Schmierstoffentsorgungssystem 5. Dadurch, dass sowohl die erste Schmierstoffmenge 8 wie auch die zweite Schmierstoffmenge 9 bestimmt wird, können die Mengen aufeinander angepasst werden. Beispielsweise können diese auf einen gleichen Wert angepasst werden, um die Gesamtschmierstoffmenge in dem Lager 2 konstant zu halten. Um die Gesamtschmierstoffmenge in dem Lager 2 zu reduzieren, kann ggf. die zweite entnommene Schmierstoffmenge 9 größer als die erste zugeführte Schmierstoffmenge 8 sein. Genauso kann, beispielsweise um die Schmierstoffmenge in dem Lager 2 zu erhöhen, die erste zugeführte Schmierstoffmenge 8 größer als die zweite entnommene Schmierstoffmenge 9 dosiert werden.

Optional umfasst das Schmiersystem 1 bei dem Ausführungsbeispiel der Fig. 1 auch eine Schmierstoffanalyseeinrichtung 14. Mit der Schmierstoffanalyseeinrichtung 14 kann beispielsweise eine Zustandsanalyse des entnommenen Schmierstoffs, also der zweiten Schmierstoffmenge 9, durchgeführt werden. Es kann ggf. eine Qualitätsanalyse der zweiten Schmierstoffmenge 9 durchgeführt werden. Zur Qualitätsanalyse der zweiten Schmierstoffmenge 9 kann beispielsweise das Fließverhalten, Alter und/oder ein Verschmutzungsgrad des Schmierstoffs ermittelt werden.

Die mit der Schmierstoffanalyseeinrichtung 14 ermittelten Werte können, wie durch den Pfeil 15 angedeutet, der Steuereinrichtung 7 mitgeteilt werden. In Abhängigkeit des ermittelten Schmierstoffzustands kann beispielsweise von der Steuereinrichtung 7 ein langsamerer Schmierstoffaustausch bewirkt werden, wenn die entnommene Schmierstoffmenge 9 eine bestimmte Schmierstoffqualität aufweist, wie gut oder noch zu gut. Dann können ggf. die Intervalle, in denen der Schmierstoff ausgetauscht wird, also eingebracht und entnommen wird, vergrößert werden. Ergänzend oder alternativ kann auch die in einem Teilbefüllungs- und -entleerungsvorgang eingebrachte und entnommene Schmierstoffmenge verkleinert werden. Der Schmierstoffaustausch kann also beispielsweise in Menge und Frequenz an eine erfasste Schmierstoffqualität angepasst werden.

Ferner umfasst das Schmiersystem 1 bei dem Ausführungsbeispiel der Fig. 1 optional eine Lageranalyseeinrichtung 16. Mit der Lageranalyseeinrichtung 16 kann eine Zustandsüberwachung des Lagers 2 durchgeführt werden. Wie mit dem Pfeil 17 angedeutet, kann die Lageranalyseeinrichtung 16 Informationen über einen Zustand des Lagers 2 erhalten. Diese können, wie mit dem Pfeil 18 angedeutet, an die Steuereinrichtung 7 übermittelt werden. Mit der Lageranalyseeinrichtung 16 kann also eine Zustandsüberwachung (zum Beispiel condition monitoring) des Lagers 2 durchgeführt werden. Beispielsweise kann dazu ein Geräusch und/oder dessen Lautstärke, das bei dem Betrieb des Lagers 2 auftritt, erfasst werden. Ergänzend oder alternativ können auch Schwingungen, die bei einem Betrieb des Lagers 2 auftreten, erfasst und/oder ausgewertet werden. In Abhängigkeit des erfassten Lagerzustands kann eine Gesamtschmierstoffmenge in dem Lager 2 erhöht und/oder verringert werden. Beispielsweise kann bei erhöhten Schwingungswerten eine Schmierstoffmenge oder die Gesamtschmierstoffmenge in dem Lager 2 erhöht werden. Mit anderen Worten können durch die Integration weiterer Komponenten, wie beispielsweise der Lageranalyseeinrichtung 16 oder der Schmierstoffanalyseeinrichtung 14 weitere Einflussgrößen in das Schmiersystem 1 eingebracht werden, mit denen die Lagerschmierung weiter optimiert werden kann. Das Schmiersystem 1 kann bei manchen Ausführungsbeispielen als eine integrierte intelligente Großlagerschmierung zur optimalen Schmierung von Lagern oder Großlagern genutzt werden. Dazu wird eine aktive Schmierstoffzuführung in das Lager und eine aktive Schmierstoffabführung aus dem Lager mit einer gemeinsamen Steuerung kombiniert.

Durch die Integration weiterer Komponenten kann das Schmiersystem 1 also beispielsweise modular mit Funktionen erweitert werden. In manchen Fällen kann das System mit sogenannten Condition-Monitoring-Systemen (von. engl.: "Zustandsanalyse", zum Beispiel Schmierstoffzustandsanalyse und Lagerzustandsanalyse) verbunden werden. Wenn also die erfassten Lager- oder Schmierstoffzustände Schäden des Lagers indizieren, kann der Füllgrad oder die Gesamtschmierstoffmenge in dem Lager 2 angepasst, beispielsweise erhöht werden. Dadurch können evtl. Schäden an dem Lager oder an Lagerkomponenten vermieden oder zumindest verzögert werden.

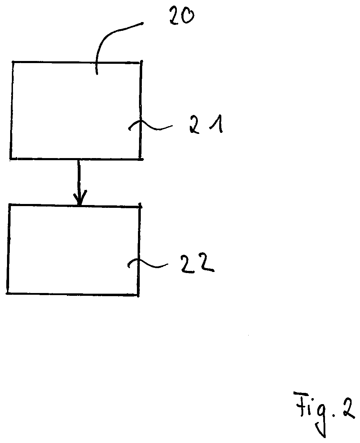

Fig. 2 zeigt eine schematische Darstellung eines Verfahrens 20 zum Schmieren eines Lagers gemäß einem Ausführungsbeispiel.

Bei dem Verfahren 20 zum Schmieren eines Lagers wird in einem Vorgang 21 eine Fördereinrichtung eines Schmierstoffversorgungssystems aktiviert, sodass diese eine erste Schmierstoffmenge in das Lager einbringt. In einem anderen Vorgang 22 wird eine Fördereinrichtung eines Schmierstoffentsorgungssystems aktiviert, sodass diese eine zweite Schmierstoffmenge aus dem Lager entnimmt. Das Aktivieren der beiden Fördereinrichtungen erfolgt dabei in Abhängigkeit voneinander.

Durch die Kombination von Schmierstoffversorgung und -entsorgung aus dem Lager wird ein Komplettsystem oder Verfahren geschaffen, das eine optimale Schmierung des Lagers gewährleisten kann. Mit dem Verfahren 20 oder dem Schmiersystem 1 kann das Lager 2 in einem optimalen Zustand gehalten werden. Ferner kann eine Schmierstoffqualität durch den kontinuierlichen Schmierstoffaustausch konstant hoch gehalten werden. Auch lässt sich so ein konstanter Füllgrad des Lagers 2 durch kontrolliertes Zu- und/oder Abführen von Schmierstoff oder Fett mit einem Erfassen der jeweiligen Mengen realisieren.

Mit dem Schmiersystem 1 und dem Verfahren 20 gemäß den Ausführungsbeispielen kann bei manchen Lagern die Zuverlässigkeit und die zu erwartende Lebensdauer erhöht werden. Das Schmiersystem 1 für ein Lager 2 und das Verfahren 20 zum Schmieren des Lagers 2 können bei einer Vielzahl von Anwendungen eingesetzt werden. Beispielsweise kann es sich bei dem Lager 2 um ein Wälz- oder Gleitlager handeln. Ergänzend oder alternativ kann das Lager 2 ein Großlager sein. Großlager können einen Durchmesser von über 500 mm aufweisen. Diese Großlager können zentrale Komponenten in einer Vielzahl von Anlagen und Anwendungen darstellen.

Genauso kann das Schmiersystem 1 auch bei mittleren oder kleineren Lagern, also beispielsweise mit einem Durchmesser eingesetzt werden, der kleiner als 500 mm ist. Beispielsweise können das System 1 und das Verfahren 20 bei allen möglichen Lagern, besonders in Anwendungsfällen die schwer zugänglich sind, eingesetzt werden. Das Schmiersystem oder auch das Verfahren kann zum Beispiel in Lagern von Pressen, Maschinen zur Energieerzeugung, Maschinen zur erneuerbaren Energieerzeugung wie Windenergieanlagen, Werkzeugmaschinen, Generatoren, Turbinen, im Bergbau (zum Beispiel Mining), Maschinen für die Papierherstellung und/oder -verarbeitung und dgl. eingesetzt bzw. angewandt werden. Für diese Anwendungen kann die optimale Versorgung der Lager mit Schmierstoff eine Möglichkeit bieten, das Lager vor einer Vielzahl schädlicher Einflüsse zu schützen.

Bei einigen weiteren Ausführungsbeispielen können Merkmale, die in anderen Ausführungsbeispielen als Vorrichtungsmerkmal offenbart sind, auch als Verfahrensmerkmale implementiert sein. Ferner können ggf. auch Merkmale, die in manchen Ausführungsbeispielen als Verfahrensmerkmale implementiert sind, in anderen Ausführungsbeispielen als Vorrichtungsmerkmale implementiert sein.

### Bezugszeichenliste

- 1: Schmiersystem
- 2: Lager
- 3: Schmierstoffversorgungssystem
- 4: Fördereinrichtung
- 5: Schmierstoffentsorgungssystem
- 6: Fördereinrichtung
- 7: Steuereinrichtung
- 8: erste Schmierstoffmenge
- 9: zweite Schmierstoffmenge
- 10: Messeinrichtung
- 11: Pfeil (Datenaustausch, Pfeilrichtung, Datenrichtung)
- 12: Messeinrichtung
- 13: Pfeil
- 14: Schmierstoffanalysesystem
- 15: Pfeil
- 16: Lageranalysesystem
- 17: Pfeil
- 20: Verfahren
- 21: Aktivieren
- 22: Aktivieren

## Patentansprüche

1. Schmiersystem (1) für ein Lager (2) mit:
einem Schmierstoffversorgungssystem (3) mit einer Fördereinrichtung (4), die ausgebildet ist, um eine erste Schmierstoffmenge (8) in das Lager (2) einzubringen;
einem Schmierstoffentsorgungssystem (5) mit einer Fördereinrichtung (6), die ausgebildet ist, um eine zweite Schmierstoffmenge (9) aus dem Lager (2) zu entnehmen; und
einer Steuereinrichtung (7), die ausgebildet ist, um die Fördereinrichtung (6) des Schmierstoffentsorgungssystems (5) und die Fördereinrichtung (4) des Schmierstoffversorgungssystems (3) in Abhängigkeit voneinander zu aktivieren, **dadurch gekennzeichnet, daß** das Schmierstoffversorgungssystem (3) eine Messeinrichtung (10) umfasst, die ausgebildet ist, um das Volumen oder eine Masse der ersten Schmierstoffmenge (8) zu bestimmen.

2. Schmiersystem (1) nach Anspruch 1, wobei die Steuereinrichtung (7) ausgebildet ist, um die Fördereinrichtungen (4, 6) in kurzen Intervallen zu aktivieren, sodass eine Gesamtschmierstoffmenge in dem Lager (2), die für einen bestimmten Betriebszeitraum vorgesehen ist, teilweise durch Zuführen einer Mehrzahl von Teilschmierstoffmengen in einer Mehrzahl von Teilbefüllungsvorgängen durch die Fördereinrichtung (4) des Schmierstoffversorgungssystems (3) und teilweise durch Abführen einer Mehrzahl von Teilentleerungsvorgängen durch die Fördereinrichtung (6) des Schmierstoffentsorgungssystems (5) während des bestimmten Betriebszeitraums zumindest teilweise ausgetauscht wird.

3. Schmiersystem (1) nach einem der vorhergehenden Ansprüche, wobei die Steuereinrichtung (7) ausgebildet ist, um die Fördereinrichtung (6) des Schmierstoffentsorgungssystems (5) so anzusteuern, dass die zweite Schmierstoffmenge (9) der ersten Schmierstoffmenge (8) entspricht, sodass eine Gesamtschmierstoffmenge in dem Lager (2) im Wesentlichen konstant ist.

4. Schmiersystem (1) nach einem der vorhergehenden Ansprüche, wobei das Schmierstoffentsorgungssystem (5) eine Messeinrichtung (12) umfasst, die ausgebildet ist, um das Volumen oder eine Masse der zweiten Schmierstoffmenge (9) zu bestimmen.

5. Schmiersystem (1) nach einem der vorhergehenden Ansprüche, umfassend zumindest eine Schmierstoffanalyseeinrichtung (14), die ausgebildet ist, um einen Zustand der zweiten entnommenen Schmierstoffmenge (9) zu ermitteln.

6. Schmiersystem (1) nach einem der vorhergehenden Ansprüche, umfassend eine Lageranalyseeinrichtung (16), die ausgebildet ist, um einen Zustand des Lagers (2) zu ermitteln.

7. Schmiersystem (1) nach einem der Ansprüche 5 oder 6, wobei die Steuereinrichtung (7) ausgebildet ist, um die Menge der ersten Schmierstoffmenge (8) gegenüber der Menge der zweiten Schmierstoffmenge (9) anzupassen in Abhängigkeit des ermittelten Zustands des Lagers (2) und/oder des Zustands der zweiten entnommenen Schmierstoffmenge (9), um die Gesamtschmierstoffmenge in dem Lager (2) zu verändern.

8. Lager (2) mit einem Schmiersystem (1) nach einem der Ansprüche 1 bis 7.

9. Verfahren (20) zum Schmieren eines Lagers (2) umfassend:
Aktivieren (21) einer Fördereinrichtung (4) eines Schmierstoffversorgungssystems (3), sodass diese eine erste Schmierstoffmenge (8) in das Lager (2) einbringt;
Messen einer Masse oder eines Volumens der ersten Schmierstoffmenge (8);
Aktivieren (22) einer Fördereinrichtung (6) eines Schmierstoffentsorgungssystems (5), sodass diese eine zweite Schmierstoffmenge (9) aus dem Lager (2) entnimmt, wobei die Fördereinrichtung (4) des Schmierstoffversorgungssystems (3) und die Fördereinrichtung (6) des Schmierstoffentsorgungssystems (5) in Abhängigkeit voneinander aktiviert werden.

## Claims

1. Lubricating system (1) for a bearing (2) having:
a lubricant supply system (3) with a conveying device (4) which is configured to introduce a first lubricant quantity (8) into the bearing (2);
a lubricant disposal system (5) with a conveying device (6) which is configured to remove a second lubricant quantity (9) from the bearing (2); and
a control device (7) which is configured to activate the conveying device (6) of the lubricant disposal system (5) and the conveying device (4) of the lubricant supply system (3) in a manner which is dependent on one another, **characterized in that** the lubricant supply system (3) comprises a measuring device (10) which is configured to determine the volume or a mass of the first lubricant quantity (8).

2. Lubricating system (1) according to Claim 1, the control device (7) being configured to activate the conveying devices (4, 6) at short intervals, with the result that a total lubricant quantity in the bearing (2), which total lubricant quantity is provided for a defined operating time period, is exchanged at least partially during the defined operating time period partially by way of feeding in of a plurality of part lubricant quantities in a plurality of part filling operations by way of the conveying device (4) of the lubricant supply system (3) and partially by way of discharging of a plurality of part emptying operations by way of the conveying device (6) of the lubricant disposal system (5).

3. Lubricating system (1) according to either of the preceding claims, the control device (7) being configured to actuate the conveying device (6) of the lubricant disposal system (5) in such a way that the second lubricant quantity (9) corresponds to the first lubricant quantity (8), with the result that a total lubricant quantity in the bearing (2) is substantially constant.

4. Lubricating system (1) according to one of the preceding claims, the lubricant disposal system (5) comprising a measuring device (12) which is configured to determine the volume or a mass of the second lubricant quantity (9) .

5. Lubricating system (1) according to one of the preceding claims, comprising at least one lubricant analysis device (14) which is configured to determine a state of the second removed lubricant quantity (9).

6. Lubricating system (1) according to one of the preceding claims, comprising a bearing analysis device (16) which is configured to determine a state of the bearing (2).

7. Lubricating system (1) according to either of Claims 5 and 6, the control device (7) being configured to adapt the quantity of the first lubricant quantity (8) with respect to the quantity of the second lubricant quantity (9) in a manner which is dependent on the determined state of the bearing (2) and/or the state of the second removed lubricant quantity (9), in order to change the total lubricant quantity in the bearing (2).

8. Bearing (2) having a lubricating system (1) according to one of Claims 1 to 7.

9. Method (20) for lubricating a bearing (2) comprising:
activating (21) of a conveying device (4) of a lubricant supply system (3), with the result that the said conveying device (4) introduces a first lubricant quantity (8) into the bearing (2);
measuring of a mass or a volume of the first lubricant quantity (8);
activating (22) of a conveying device (6) of a lubricant disposal system (5), with the result that the said conveying device (6) removes a second lubricant quantity (9) from the bearing (2), the conveying device (4) of the lubricant supply system (3) and the conveying device (6) of the lubricant disposal system (5) being activated in a manner which is dependent on one another.

## Revendications

1. Système de lubrifiant (1) pour un palier (2), le système de lubrifiant comprenant :
un système d'alimentation en lubrifiant (3) comprenant un dispositif de refoulement (4) qui est conçu pour introduire une première quantité de lubrifiant (8) dans le palier (2) ;
un système d'élimination de lubrifiant (5) comprenant un dispositif de refoulement (6) qui est conçu pour retirer une deuxième quantité de lubrifiant (9) du palier (2) ; et
un dispositif de commande (7) qui est conçu pour activer le dispositif de refoulement (6) du système d'élimination de lubrifiant (5) et le dispositif de refoulement (4) du système d'alimentation en lubrifiant (3) en fonction l'un de l'autre, **caractérisé en ce que** le système d'alimentation en lubrifiant (3) comporte un dispositif de mesure (10) qui est conçu pour déterminer le volume ou une masse de la première quantité de lubrifiant (8).

2. Système de lubrification (1) selon la revendication 1, dans lequel le dispositif de commande (7) est conçu pour activer les dispositifs de refoulement (4, 6) à des intervalles courts, de telle sorte qu'une quantité totale de lubrifiant dans le palier (2), laquelle est prévue pour une période de fonctionnement définie, soit au moins partiellement remplacée pendant la période de fonctionnement définie, partiellement par acheminement d'une pluralité de quantités partielles de lubrifiant dans une pluralité d'opérations de remplissage partiel au moyen du dispositif de refoulement (4) du système d'alimentation en lubrifiant (3) et partiellement par évacuation d'une pluralité d'opérations de vidange partielle au moyen du dispositif de refoulement (6) du système d'élimination de lubrifiant (5).

3. Système de lubrification (1) selon l'une des revendications précédentes, dans lequel le dispositif de commande (7) est conçu pour commander le dispositif de refoulement (6) du système d'élimination de lubrifiant (5) de telle sorte que la deuxième quantité de lubrifiant (9) corresponde à la première quantité de lubrifiant (8), de sorte qu'une quantité totale de lubrifiant dans le palier (2) soit sensiblement constante.

4. Système de lubrification (1) selon l'une des revendications précédentes, dans lequel le système d'élimination de lubrifiant (5) comporte un dispositif de mesure (12) qui est conçu pour déterminer le volume ou une masse de la deuxième quantité de lubrifiant (9).

5. Système de lubrification (1) selon l'une des revendications précédentes, comportant au moins un dispositif d'analyse de lubrifiant (14) qui est conçu pour déterminer un état de la deuxième quantité de lubrifiant retirée (9) .

6. Système de lubrification (1) selon l'une des revendications précédentes, comportant un dispositif d'analyse de palier (16) qui est conçu pour déterminer un état du palier (2) .

7. Système de lubrification (1) selon la revendication 5 ou 6, dans lequel le dispositif de commande (7) est conçu pour adapter la quantité de la première quantité de lubrifiant (8) par rapport à la quantité de la deuxième quantité de lubrifiant (9) en fonction de l'état déterminé du palier (2) et/ou de l'état de la deuxième quantité de lubrifiant retirée (9), afin de modifier la quantité totale de lubrifiant dans le palier (2).

8. Palier (2) comprenant un système de lubrification (1) selon l'une des revendications 1 à 7.

9. Procédé (20) de lubrification d'un palier (2), le procédé comportant :
l'activation (21) d'un dispositif de refoulement (4) d'un système d'alimentation en lubrifiant (3), de telle sorte que celui-ci introduise une première quantité de lubrifiant (8) dans le palier (2) ;
la mesure d'une masse ou d'un volume de la première quantité de lubrifiant (8) ;
l'activation (22) d'un dispositif de refoulement (6) d'un système d'élimination de lubrifiant (5), de telle sorte que celui-ci retire une deuxième quantité de lubrifiant (9) du palier (2), le dispositif de refoulement (4) du système d'alimentation en lubrifiant (3) et le dispositif de refoulement (6) du système d'élimination de lubrifiant (5) étant activés en fonction l'un de l'autre.
